(19) Europäisches Patentamt

European Patent Office

Office européen des brevets

(11) EP 2 202 874 A1

(12) **EUROPEAN PATENT APPLICATION**

(43) Date of publication:
30.06.2010 Bulletin 2010/26

(51) Int Cl.:
$H02M\ 3/335^{(2006.01)}$

(21) Application number: 09180811.3

(22) Date of filing: 28.12.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 29.12.2008  IT TO20080997

(71) Applicant: Alenia Aeronautica S.p.A.
80038 Pomigliano D'Arco (Napoli) (IT)

(72) Inventors:
• Anastasio, Vincenzo
80123 Napoli (IT)
• Di Donna, Laura
83042 Atripalda (IT)

(74) Representative: Deambrogi, Edgardo et al
Corso Emilia 8
10152 Torino (IT)

(54) **Resonant switching converter.**

(57)    The invention describes a circuit arrangement of a resonant switching converter for providing an output DC voltage to a load (R1) from a supply DC voltage source.

The arrangement comprises an inverting bridge adapted to selectively connect the voltage source to at least one load (R1; $R_o$) through a switching network (M1-M4; T1, T2) electronically driven in order to achieve a desired output voltage; and a resonant circuit (L1, C5; $L_s$, $C_p$) coupled with the inverter bridge and operatively arranged across the supply source, adapted to establish a controlled voltage across the load (R1; $R_o$), including a first resonant electric element with an essentially inductive impedance (L1; $L_s$) in series with a second resonant electric element with an essentially capacitive impedance (C5; $C_p$), which are adapted to establish a fundamental resonance frequency of the circuit.

The resonant circuit includes a further resonant electric element with an essentially inductive impedance (L2; $L_p$), arranged substantially in parallel with the electric element with essentially capacitive impedance (C5; $C_p$), and adapted to determine additional resonance frequencies of the circuit lower than the fundamental resonance frequency.

The resonant electrical elements (L1, C5, L2; $L_s$, $C_p$, $L_p$) have respective inductance and capacitance values such as to determine a quality factor Q of the resonant circuit lower than unity, and preferably equal to 0.5.

FIG. 1

EP 2 202 874 A1

## EP 2 202 874 A1

**Description**

The present invention concerns electric power distribution networks, and more specifically a circuit arrangement for a resonant switching converter, in particular for active power conversion in a distribution network for avionic applications, according to the preamble of claim 1.

It is reasonable to expect that the next generation of high-performance systems for avionic applications and others besides, for example signal processing systems, calculation systems and radar systems, will be distributed in type. For this reason, it can be predicted that also the architecture of the corresponding supply system will be distributed in type, in a context in which the real power available on line will be processed by local DC-DC converter adapted to supply the distributed loads.

Conventional circuit arrangements for DC-DC converters are essentially based on Switched-Mode technology, which uses a pulse width modulation method for controlling the power at the loads, and on the correct sizing of an overcharge capacitor, adapted to absorb possible malfunctions at the loads, the presence of which obliges a suitable thermal and magnetic design.

Although the switching philosophy of Switched-Mode converters is such as to keep the losses low and gain efficiency, the results obtained are no longer satisfactory as the need to manage very high powers increases, particularly if it is opted to operate at a high frequency to reduce the drawbacks in terms of additional weight, volume, packaging, heat rejection, and it would be unsustainable for applications in electric distribution systems on board aircraft in which every control function is actuated electrically, rather than hydraulically or pneumatically, for which the electrical power required on board and the number of loads connected to the on board power distribution network increase enormously. The conventional configuration based upon the presence of an overcharge capacitor would, indeed, require unsuitable or totally impractical oversizing of the capacitor, due to the excessive bulk and weight involved.

In the field of entirely electrical high-performance systems for avionic applications it is therefore necessary to know how to tackle the design challenges of electric distribution networks aimed at satisfying the following key characteristics: high efficiency, to save power and therefore weight on board; high reliability, for use in critical sectors, for example in the aeronautical sector; modularity, for greater competitivity in terms of costs and greater adaptability to different network configurations both in normal operating modes, and when malfunctioning.

It is therefore necessary to adopt other power distribution techniques, which allow modulation over time of the power intended for typically variable loads to obtain overall greater flexibility in the conditioning of the power to a plurality of loads supplied simultaneously. The possibility of regulating, during transient, the power to non-critical loads would advantageously allow to keep available the power required by the critical loads, but avoiding a total interruption of the supply to the remaining loads, which on the other hand would involve subsequent starting transients when the normal operating conditions have been restored.

A solid-state power distribution system adapts well to these purposes, and converters with resonant configuration are the solutions to the problems outlined above.

The purpose of the invention is to provide an improved circuit arrangement of a resonant switching converter for supplying a network of loads with variable configuration, which makes it possible to obtain a high efficiency in any operative condition of conversion, an intrinsic protection against short-circuits and the ability to build modular supply devices.

According to the present invention such a purpose is accomplished thanks to a circuit arrangement for a resonant switching converter, having the characteristics outlined in claim 1.

Particular embodiments form the subject of the dependent claims, the content of which is to be considered as an integral or integrating part of the present description.

In short, the circuit arrangement of the invention is based on the parallel resonant bridge topology and comprises, in the preferred embodiment, a full-wave inverter circuit, a resonant circuit, an output transformer, an output diode rectifier and a direct current output filter.

The resonant circuit comprises a parallel branch the components of which are selected in order to obtain an overall delayed current at the output of the full-wave bridge in a large range of frequencies. Such a phase relationship is ensured when inductive behaviour dominates in the resonant branch. If in a conventional resonant circuit this only occurs when a switching frequency slightly higher than the fundamental resonance frequency is imposed, this limitation is overcome according to the invention by providing an additional inductance, in parallel with the capacitive component of the resonant circuit, i.e. with the load, thereby giving the resonant circuit itself multi-resonance characteristics.

Thanks to this arrangement, the topology makes it possible to obtain behaviour of the converter that is independent from the load over a wide range of switching frequencies and a low sensitivity to possible frequency drifts.

Advantageously, the solution of the invention satisfies every key requirement without resorting to compromises and balancing. The invention is based on a transistor-based DC-DC converter arranged to regulate the output voltage to the desired value and independently from the load with high efficiency by using a parallel resonant topology. Making the converter in solid-state technology makes it possible to obtain high reliability, improved conversion efficiency (of the order of 95% or more) and allows a modular approach to make converter assemblies sized according to the needs of the specific application.

Although the invention is described hereafter with reference to the preferred application in the aeronautical field, the advantages of the circuit arrangement can be advantageously exploited in any other energy conditioning configuration (for example inverter circuits, boosts, etc.) in other fields of industrial application, including the automotive industry.

Further characteristics and advantages of the invention will be outlined in greater detail in the following detailed description of an embodiment thereof, given as a non-limiting example, with reference to the attached drawings, in which:

figure 1 is a representation of the circuit arrangement of the parallel resonant converter according to the invention;
figure 2 is a schematic circuit representation of the arrangement of figure 1;
figure 3 is an equivalent circuit representation of the arrangement of figure 2;
figure 4 shows diagrams of the electrical characteristics of the arrangement of figure 2;
figure 5 shows four equivalent circuit representations of the arrangement of figure 2, according to respective operating modes;
figure 6 is a graph that shows the curve of the voltage gain according to the ratio between resonance frequency and switching frequency, and of Q for an arrangement of a conventional parallel resonant circuit;
figure 7 is a graph that shows the curve of the voltage gain of the arrangement of the invention as a function of the ratio between resonance frequency and switching frequency, and of Q of the arrangement;
figure 8 is a graph that shows the curve of the voltage gain of the arrangement of the invention as a function of the ratio between resonance frequency and switching frequency, and of Q of the arrangement;
figure 9 is a graph that shows the curve of the voltage across the resonance capacitor for an arrangement of a conventional parallel resonant circuit and for the arrangement of the invention, as a function of the ratio between resonance frequency and switching frequency of the arrangement;
figure 10 is a graph that shows the curve of the current through the resonant inductor for an arrangement of a conventional parallel resonant circuit and for the arrangement of the invention, as a function of the ratio between resonance frequency and switching frequency of the arrangement;
figure 11 is a diagram that shows the curve of the current and of the voltage for a switch of the inverter bridge;
figure 12 is a graph that shows the current gain of a conventional parallel resonant circuit as a function of the Q of the circuit; and
figure 13 is a circuit diagram of an electric power distribution network based on circuit arrangements of the invention.

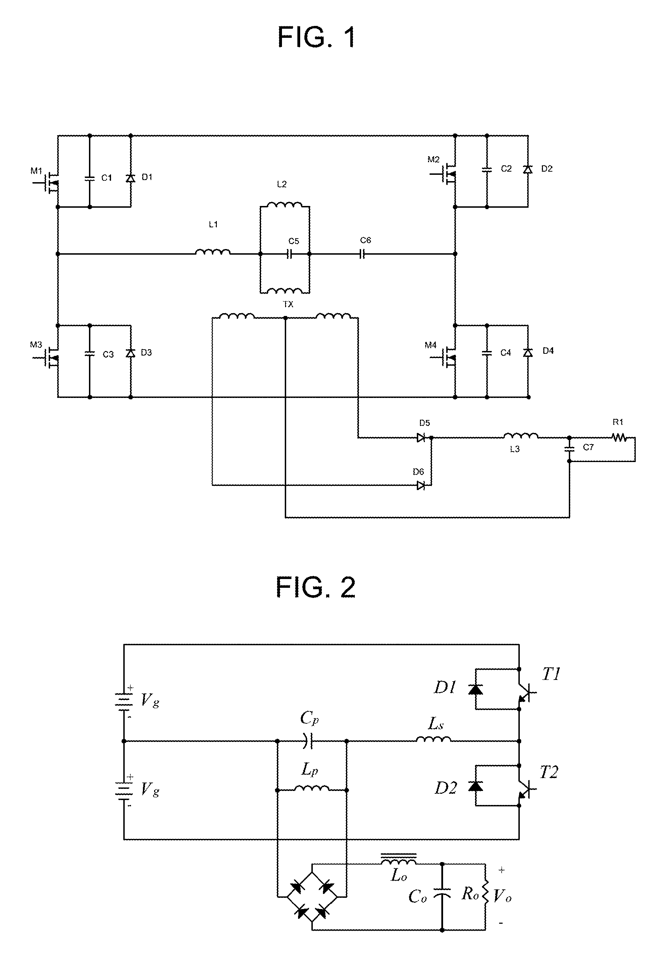

Figure 1 shows the overall topology of the circuit arrangement of the invention.

The circuit arrangement comprises an inverter bridge, preferably a full-wave bridge formed from four switching devices respectively identified with M1, M2, M3 and M4, with which relative circuits (per sé known) for suppressing the electrical transients or snubbers are associated, consisting of the arrangement of a diode and a capacitor in parallel with the switch, respectively represented here by the pairs D1 and C1, D2 and C2, D3 and C3; D4 and C4.

A transverse branch of the inverter bridge comprises an inductance L1 and a capacitance C5 forming the resonant circuit of the converter arrangement, and an uncoupling capacitor C6.

TX indicates a transformer supposed to be ideal, adapted to connect a substantially resistive load R1 to the resonant branch of the bridge inverter circuit through an output stage including a rectifying circuit formed from the diodes D5 and D6 and a low-pass output filter, formed by the inductance L3 and the capacitance C7.

The load R1, ideally transferred to the primary of the transformer, is in parallel with the resonant capacitor C5, hence the term parallel resonant converter.

A feedback control circuit, not depicted, is arranged to selectively switch on or off the switching devices M1-M4 as a function of the detected output voltage and the desired one.

The modulation frequency of the switches M1-M4 determines the electric characteristics of the resonant branch. The ratio between modulation frequency and fundamental resonant frequency of the resonant branch (i.e. due to the inductance L1 and the capacitance C5) affects the voltage across the capacitor C5, and consequently the output voltage that is regulated in this way.

The non-dissipative snubbers ensure the Zero Voltage Switching (ZVS) and the Zero Current Switching (ZCS) and thus very low switching losses. This is true provided that the current lags with respect to the voltage across the switch. Such a phase relationship occurs as the inductive behaviour dominates in the resonant branch, which means, in a parallel resonant converter according to a conventional configuration, only when the switching frequency of the inverter bridge is greater than the resonance frequency.

According to a first aspect of the invention, such a restriction is brilliantly overcome thanks to the provision of an additional inductance L2 across the capacitance C5 in the resonant branch, for which reason the aforementioned branch acquires a multi-resonant behaviour. The benefits of zero current and voltage switching (ZCS and ZVS) are consequently maintained even if the switching frequencies are lower than the fundamental resonance frequency determined by the components L1 and C5, i.e. in the case of sudden and undesired drift of the switching frequency during adjustment.

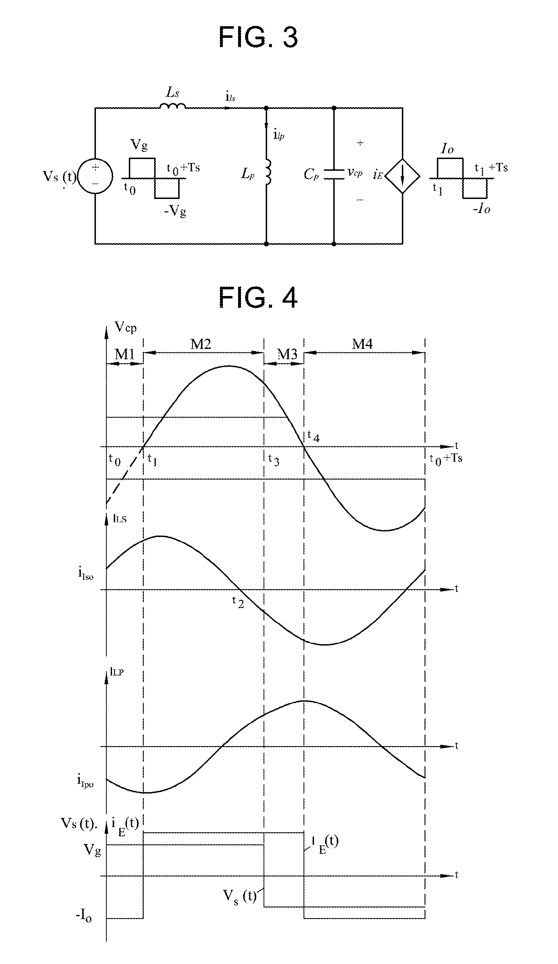

Hereafter a description of the operating principle of the fundamental basic topology of the arrangement subject of the invention is provided, which is schematically represented in figure 2 and, through an equivalent circuit, in figure 3. The components $C_p$ and $L_s$ form the parallel resonant branch of the converter, whereas $L_p$ represents the additional inductance that gives the topology the characteristics of a multi-resonant converter. For the sake of simplicity a didactic notation is applied, for which reason the diodes and the transistors are considered ideal and the switching occurs with duty cycle of 50%.

The effects of the switching devices can be considered as a voltage generator $v_s(t)$. The output current can be considered as a current $I_0$ of constant value provided that the output inductor $L_0$ be sufficiently large. The input current to the rectifier $i_E(t)$ is equal to $+I_0$ or to $-I_0$ depending on the sign of the voltage across the resonant capacitor C5, indicated $v_{cp}(t)$.

The equivalent model of the proposed solution clearly determines a multi-resonant behaviour of the circuit arrangement.

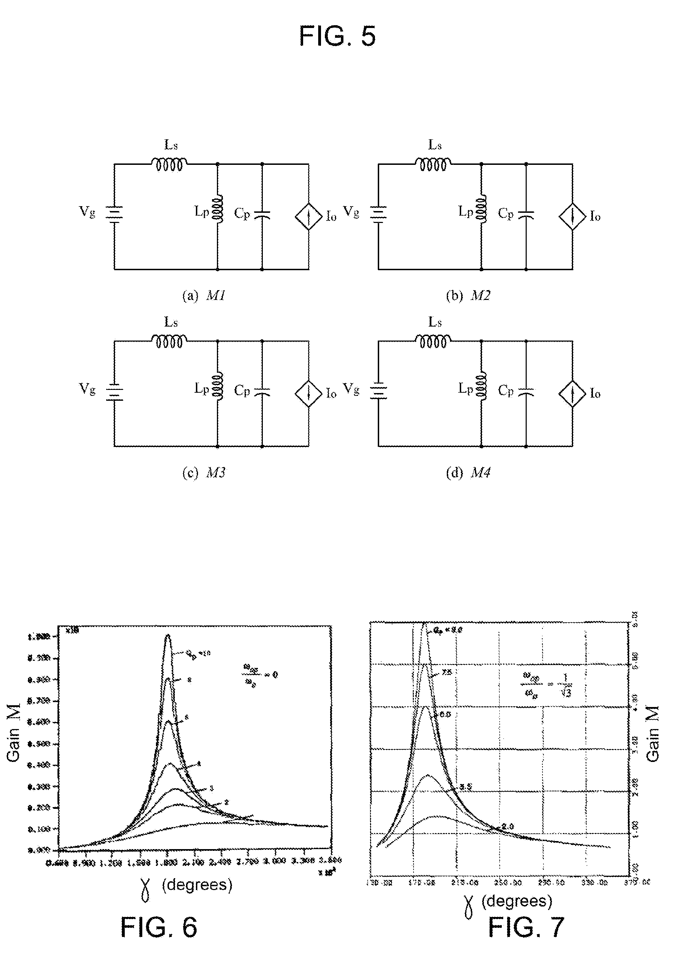

Figure 4 illustrates the typical electrical characteristics in a direct current operating mode. The voltage across the capacitor Cp (and the load) is indicated $v_{cp}$; the current in the two inductors $L_s$ and $L_p$ is respectively indicated $i_{Ls}$, $i_{Lp}$; also represented is the current $i_E(t)$ in the equivalent load, oscillating between the values $+I_0$ and $-I_0$. The regions marked M1, M2, M3, M4 represent the four operating modes of the equivalent model according to the on and off states of the switches, and the relative circuit configurations of the equivalent model of the circuit arrangement in the four operating modes are illustrated in figure 5 and the following table summarises the characterisation of each operating region.

| Mode | Switches on | Sign of the rectified voltage | $v_s(t)$ | $i_E(t)$ |
|------|-------------|-------------------------------|----------|----------|
| M1 | T1 | $v_{cp}(t) < 0$ | $+V_g$ | $-I_0$ |
| M2 | T1/D1 | $v_{cp}(t) > 0$ | $+V_g$ | $+I_0$ |
| M3 | T2 | $i_{cp}(t) > 0$ | $-V_g$ | $+I_0 +$ |
| M4 | T2/D2 | $v_{cp}(t) < 0$ | $-V_g$ | $I_0$ |

The model of figure 4 is regulated by the following differential equations:

$$\frac{di_{ls}(t)}{dt} = -\frac{1}{L_s} v_{cp}(t) + \frac{1}{L_s} v_s(t)$$

$$\frac{di_{lp}}{dt} = \frac{1}{L_p} v_{cp}(t)$$

$$C_p \frac{dv_{cp}(t)}{dt} = i_{ls}(t) - i_{lp}(t) - i_E(t)$$

The study of this non-linear system of the third order cannot be carried out in the time domain. The main parameters involved in the synthesis of the best configuration of the fundamental circuit arrangement are the overall resonant frequency (or rather pulsation) $\omega_0$ established by the resonant branch formed by $L_s$, Cp and $L_p$, and the resonant frequency (or rather pulsation) $\omega_{0p}$ established by the partial resonant configuration formed by $C_p$ and $L_p$, defined hereafter:

$$\omega_0 = \sqrt{1/LC_p}$$

$$\omega_{0p} = \sqrt{1/L_p C_p}$$

in which

$$L = \frac{L_s L_p}{L_s + L_p}$$

In the case of an arrangement of a conventional parallel resonant converter $L_p$ is an open circuit and $\omega_{0p}/\omega_0=0$.

The ratio between resonance frequency and switching frequency is indicated with $\gamma$ and expressed in degrees:

$$\gamma = \omega_0(T_s/2).$$

The voltage gain M of the circuit arrangement has a strict relationship with $\gamma$, with the ratio $\omega_{0p}/\omega_0$ and with the quality factor $Q_p$, defined as

$$Q_p = \frac{R_0}{Z_0}$$

in which

$$Z_0 = \sqrt{L/C_p}$$

Figures 6, 7 and 8 reproduce the curve of the voltage gain M with respect to $\gamma$ for different values of $Q_p$ and for the value of $\omega_{0p}/\omega_0$.

When $\gamma$ is greater than 180 degrees, the circuit arrangement operates under resonance.

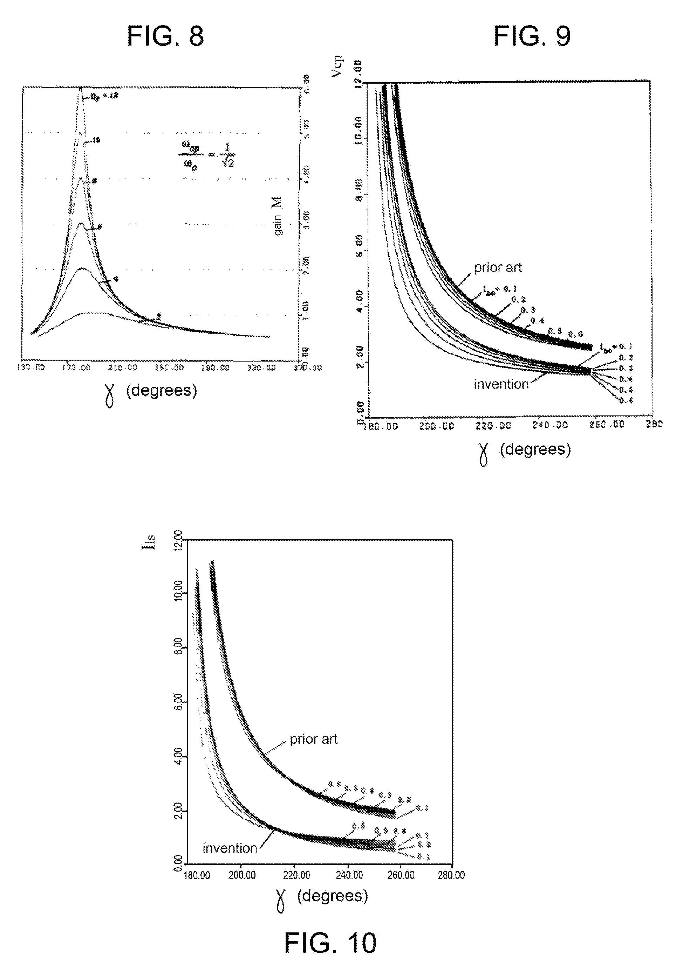

Figures 9 and 10 show the different behaviour of a circuit arrangement of a conventional parallel resonant converter and of a circuit arrangement of a parallel resonant converter according to the invention in terms of electrical drive to the main components of the resonant branch (the voltage across the capacitor $C_p$ and the current through the inductor $L_s$) and, overall, the benefit of the addition of the inductor $L_p$.

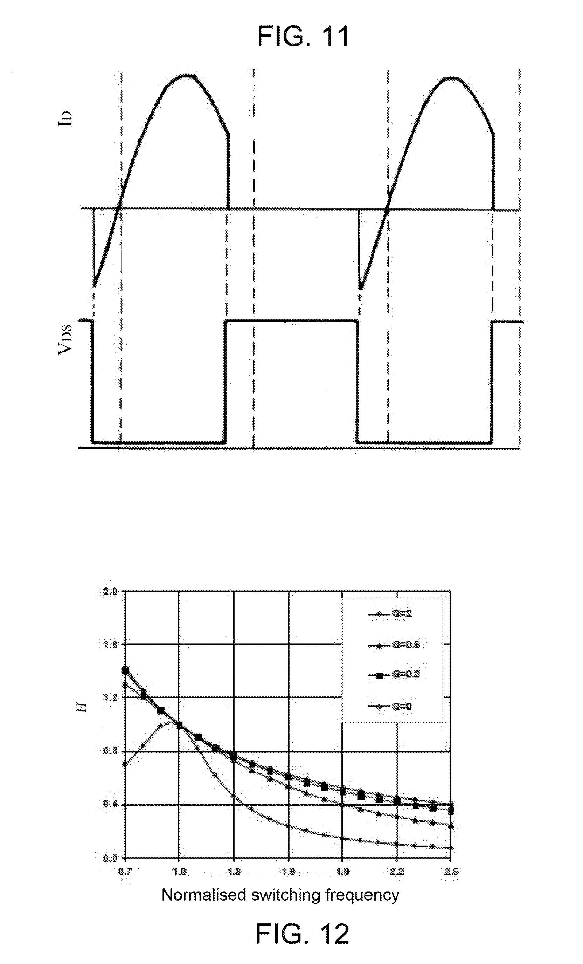

The converter arrangement has good performance since switching regions ZCS and ZVS are ensured both for switching frequencies above the fundamental resonance (determined by $C_p$ and $L_s$) and for switching frequencies below the fundamental resonance, since the current in the switches always lags with respect to the voltage across them as shown in figure 11. This behaviour makes the described circuit similar to a multi-resonant converter.

According to a further aspect of the invention, the circuit arrangement of a parallel multi-resonant converter has a low factor Q in the resonant branch, i.e. a factor Q below 1, for which reason the behaviour of the conversion arrangement is substantially independent from the load.

As the load R1 varies, the output current of the bridge is practically unchanged, and this remains true even in the case of short circuit (R1=0). In the latter case the current is determined only by the inductance L1 (the capacitance C5 is short-circuited) and flows through the free-wheeling diodes D1, D4, or D2, D3. Advantageously, in this way, the converter is not stressed and is able to recover the entire short circuit power.

The characteristic of current gain H is shown in figure 12 for a circuit arrangement of a conventional parallel resonant converter, as a function of the normalised switching frequency, for different values of Q.

It should be observed that all of the curves for low Q are grouped together. Therefore, the common key characteristic of such a circuit arrangement with low Q (and of an analogous multi-resonant arrangement according to the invention) is that the current gain H remains approximately equal for a given switching frequency value, for different load values. The constancy of H as Q varies can be considered as constancy of H as the variations in load R vary until the designer is able to synthesise a parametric resonant inductor with few parameters. In other words, the input current to the inverter bridge is unchanged as the load varies, also in the case of a short circuit.

This advantageously allows a variable plurality of power conversion modules of the type described to be arranged in parallel, each with its own load, without any special control or adjustment ring apart from the main one for adjusting the output voltage. This advantage can be exploited for direct, easy and intelligent reconfiguration, to suit the needs of the system to be supplied.

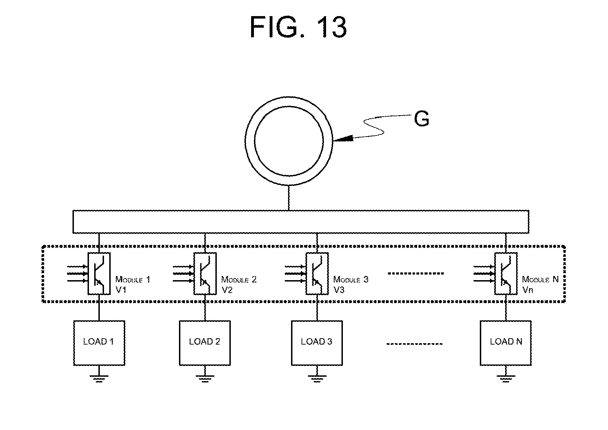

Figure 13 schematically shows an electric power distribution network supplied by a source or generating machine G to a plurality of variable loads LOAD_1, ..., LOAD_N. Each load has an associated respective converter arrangement Module1, ..., ModuleN according to a modular configuration. By suitably modulating the voltage V1, ...., Vn at some loads the operation of which is not substantially affected by a (temporary) decrease in the supply voltage, it is possible to recover amounts of power in the overall distribution network, which may be used for supplying critical loads, without needing to oversize the generating machine.

It should be noted that, when it is selected to have a low Q value of the resonant circuit, it is essentially overdamped and has an inductive input impedance. The current response to input excitation with a square wave will not therefore be sinusoidal. However, according to the definition of a resonant converter, the circuit response must just have sinusoidal sections, and therefore a circuit with low Q can still be classified as a resonant converter.

Laboratory tests have shown that the best compromise is Q=0.5 to minimise the stresses in the components, and it is possible to obtain yields equal to or over 95%.

In conclusion, the provision of a parallel additional inductance in the conventional resonant branch, or an appropriate sizing of the magnetization inductance of an existing output transformer of the converter arrangement that attributes the functionality of the additional inductance described here to such a magnetization inductance, allow a converter arrangement to be made, which is adapted to operate with non-dissipative switching in a wide range of frequencies, substantially at constant current, thus supplying a high efficiency in every operative condition, and the consequent possibility of dissipating heat by natural convection and without installation of fans, with a significant increase in reliability of the power supply circuits for critical distributed supply systems.

The integration of a less stressed inductor, i.e. not having excessive current passing through it, makes the inductance value (which contributes to determining the resonance frequency value) hardly sensitive at all to the temperature variations, i.e. it makes the circuit non-parametric.

Advantageously, the solution of the invention, by virtue of the low quality factor Q of the resonant circuit, can be widely exploited to improve electric power supply systems, offering an intrinsic protection against short circuits and the ability to build modular supply devices thanks to the extrinsic ease of arranging different converter units in parallel without making master-slave connections or using current-sharing devices.

When a load is connected in a supply network made according to the teachings of the invention the network is flexible, easy to programme via software to withstand variations in load or malfunctions of the apparatuses supplied through a "smart" interface. In fact, the "smart" interface allows the same load to be supplied with a dedicated set of electrical characteristics: the supply of power to the load can be tuned by arranging two or more modules in parallel; the voltage level can be selected by adjusting the switching frequency. In this way, the quality of the power at the loads connected to the same network can be diversified.

Basically, a great saving in weight, high efficiency and reliability of a DC-DC converter is obtained.

Of course, without affecting the principle of the invention, the embodiments and the details of construction can be greatly varied with respect to what has been described and illustrated purely as a non-limiting example, without for this reason departing from the scope of protection of the present invention defined by the attached claims.

## Claims

**1.** A circuit arrangement of a resonant switching converter for providing an output DC voltage to a load (R1) from a supply DC voltage source, comprising:

- switching inverter means for selectively connecting said voltage source to at least a load (R1; $R_o$) through an electronically driven switching network (M1-M4; T1, T2), in order to achieve a desired output voltage; and
- a resonant circuit (L1, C5; $L_s$, $C_p$) coupled to said inverter means and operatively arranged across the supply source, adapted to establish a controlled voltage across said load (R1; $R_o$), including a first resonant electric element with an essentially inductive impedance (L1; $L_s$) in series to a second resonant electric element with an essentially capacitive impedance (C5; $C_p$) which are adapted to determine a fundamental resonance frequency of the circuit,

**characterised in that** said resonant circuit includes an additional resonant electric element with an essentially

inductive impedance (L2; $L_p$), arranged substantially in parallel with said electric element with essentially capacitive impedance (C5; $C_p$) and adapted to determine additional resonance frequencies of the circuit lower than the fundamental resonance frequency.

2. An arrangement according to claim 1, wherein said resonant electric element with essentially capacitive impedance (C5; $C_p$) is adapted to be connected electrically in parallel with the load (R1; $R_o$).

3. An arrangement according to claim 1 or 2, wherein said switching network (M1-M4; T1, T2) is driven in such a way to operate in conditions of zero current and voltage switching.

4. An arrangement according to any of the preceding claims, wherein said resonant electrical elements (L1, C5, L2; $L_s$, $C_p$, $L_p$) have respective inductance and capacitance values so as to determine a quality factor Q of the resonant circuit lower than unity.

5. An arrangement according to claim 4, wherein the inductance and capacitance values of said resonant electrical elements ($L_1$, C5, L2; $L_s$, $C_p$, $L_p$) are selected so as to determine a quality factor Q of 0.5.

6. An arrangement according to any of the preceding claims, comprising transformer means (TX) for electrically uncoupling said resonant circuit (L1, C5, L2; $L_p$, $C_p$, $L_p$) and the load (R1; $R_o$), which means include at least a primary winding connected in parallel with said resonant electrical element with essentially capacitive impedance (C5; Cp) and at least a secondary winding adapted to be coupled to the load (R1; $R_o$).

7. An arrangement according to claim 6, comprising a voltage rectifying (D5, D6) and output filter (L3, C7) circuit, connected with the secondary winding of said uncoupling transformer means (TX).

8. A network for distributing electric power to a plurality of loads, particularly for avionic applications, comprising a supply DC voltage source (G) and a plurality of DC-DC converter modules (Modulel, ..., ModuleN) selectively controllable to provide respective output DC voltages (V1, ..., Vn) to corresponding loads (LOAD_1, ..., LOAD_N), **characterised in that** each module (Modulel, ..., ModuleN) includes a resonant switching converter arrangement according to any one of claims 1 to 7.

# FIG. 1

# FIG. 2

# FIG. 3

# FIG. 4

# FIG. 5

(a) *M1*

(b) *M2*

(c) *M3*

(d) *M4*

γ (degrees)

FIG. 6

γ (degrees)

FIG. 7

## FIG. 8

$$\frac{\omega_{cp}}{\omega_c} = \frac{1}{\sqrt{2}}$$

gain M

$\gamma$ (degrees)

## FIG. 9

prior art

invention

$\gamma$ (degrees)

prior art

invention

$\gamma$ (degrees)

## FIG. 10

## FIG. 11

Normalised switching frequency

## FIG. 12

# FIG. 13

Europäisches
Patentamt

European
Patent Office

Office européen
des brevets

## EUROPEAN SEARCH REPORT

Application Number

EP 09 18 0811

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 157 593 A (PRAVEEN K. JAIN) 20 October 1992 (1992-10-20) * abstract * * figures 1,2,4 * * column 6, line 62 - column 8, line 16 * ----- | 1-7 | INV. H02M3/335 |
| X | US 4 814 962 A (FRANK M. MAGALHAES ET AL.) 21 March 1989 (1989-03-21) * abstract * * figures 2,3,13 * * column 5, line 20 - column 6, line 33 * ----- | 1-7 | |
| X | US 5 546 294 A (MICHAEL J. SCHUTTEN ET AL.) 13 August 1996 (1996-08-13) * figure 2b * * column 2, line 10 - line 13 * * column 2, line 53 - line 58 * ----- | 1 | |
| A | GB 2 271 226 A (GENERAL ELECTRIC COMPANY) 6 April 1994 (1994-04-06) * abstract * * figure 1 * * page 3, line 23 - page 5, line 15 * ----- | 2 | TECHNICAL FIELDS SEARCHED (IPC) H02M |

The present search report has been drawn up for all claims

| Place of search | Date of completion of the search | Examiner |
|---|---|---|
| The Hague | 7 May 2010 | Lund, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 18 0811

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2010

| Patent document cited in search report | | Publication date | Patent family member(s) | | Publication date |
|---|---|---|---|---|---|
| US 5157593 | A | 20-10-1992 | CA<br>JP<br>JP | 2054513 A1<br>3326754 B2<br>5168252 A | 14-06-1992<br>24-09-2002<br>02-07-1993 |
| US 4814962 | A | 21-03-1989 | CA<br>EP<br>JP | 1301245 C<br>0343855 A2<br>2013262 A | 19-05-1992<br>29-11-1989<br>17-01-1990 |
| US 5546294 | A | 13-08-1996 | DE<br>DE<br>EP<br>JP | 69617128 D1<br>69617128 T2<br>0756370 A2<br>9117156 A | 03-01-2002<br>22-08-2002<br>29-01-1997<br>02-05-1997 |
| GB 2271226 | A | 06-04-1994 | US | 5414238 A | 09-05-1995 |

EPO FORM P0459

For more details about this annex : see Official Journal of the European Patent Office, No. 12/82